Europäisches Patentamt

(19) European Patent Office

Office européen des brevets

(11) Publication number: **0 032 433**
**B1**

(12) **EUROPEAN PATENT SPECIFICATION**

(45) Date of publication of patent specification: **04.12.85**

(21) Application number: **81300079.1**

(22) Date of filing: **08.01.81**

(51) Int. Cl.⁴: **F 16 J 15/34, F 16 C 37/00, F 16 D 65/78, F 16 D 13/72**

(54) **Means for cooling positive clearance radial face seals.**

(30) Priority: **11.01.80 GB 8001039**

(43) Date of publication of application:
**22.07.81 Bulletin 81/29**

(45) Publication of the grant of the patent:
**04.12.85 Bulletin 85/49**

(84) Designated Contracting States:
**BE CH DE FR IT LI LU NL**

(56) References cited:
**DE-A-2 324 029**
**DE-A-2 730 552**
**DE-C-1 219 345**
**FR-A-2 444 866**
**GB-A-1 014 277**
**GB-A-2 033 978**
**US-A-3 592 298**

(73) Proprietor: **AE PLC**
**Cawston House Cawston**
**Rugby Warwickshire CV22 7SB (GB)**

(72) Inventor: **Scott, Peter Andrew James**
**6, Prince's Court**
**Rugby CV21 2LR (GB)**

(74) Representative: **Warren, Stanley Francis et al**
**Baron & Warren 18 South End Kensington**
**London W8 5BU (GB)**

Courier Press, Leamington Spa, England.

## Description

This invention relates to means for cooling a mechanical working element having a working face at which heat is generated during operation, and which forms one of two relatively rotatable sealing faces of a positive clearance radial face seal, such as described in GB—A—2033978.

A positive clearance radial face seal generates considerable viscous shearing power between its two opposed sealing (working) faces and because of the close operating clearances, the clearance control fluid flow between faces is often of insufficient thermal capacity to act as a sink for this power loss without exceeding a temperature which would permanently alter the properties of the control fluid adversely.

The present invention has for an object to provide improved means for cooling a sealing (working) face of a positive clearance radial face seal which overcomes or alleviates the problem of cooling a working face of limited surface area requiring a very high surface heat transfer coefficient.

The invention consists in a positive clearance radial face seal comprising two sealing members mounted respectively on a relatively rotatable shaft and housing members and each having opposed portions defining annular sealing faces having a radial clearance therebetween forming a communicating path between regions of higher and lower pressures, characterised in that at least one of the sealing members has a cavity behind its sealing face and defined, at least in part, by substantially the entire rear surface of the wall of the sealing member on which said sealing face is formed, a porous thermally-conductive mass having interconnecting pores filling said cavity and in intimate thermal contact with the rear surface of said wall, said cavity having inlet means and outlet means and means for feeding a cooling fluid under pressure to said inlet means to flow through the interconnecting pores of the porous mass in the cavity and out through said outlet means.

Preferably the porous mass is bonded together and to the rear surface of said wall of the sealing member conveniently by sintering the particles or components of the mass together and to said rear surface.

The cooling means according to the invention provides a compact and extended area for heat transfer. The porous mass may be of a high-conductivity material such as copper.

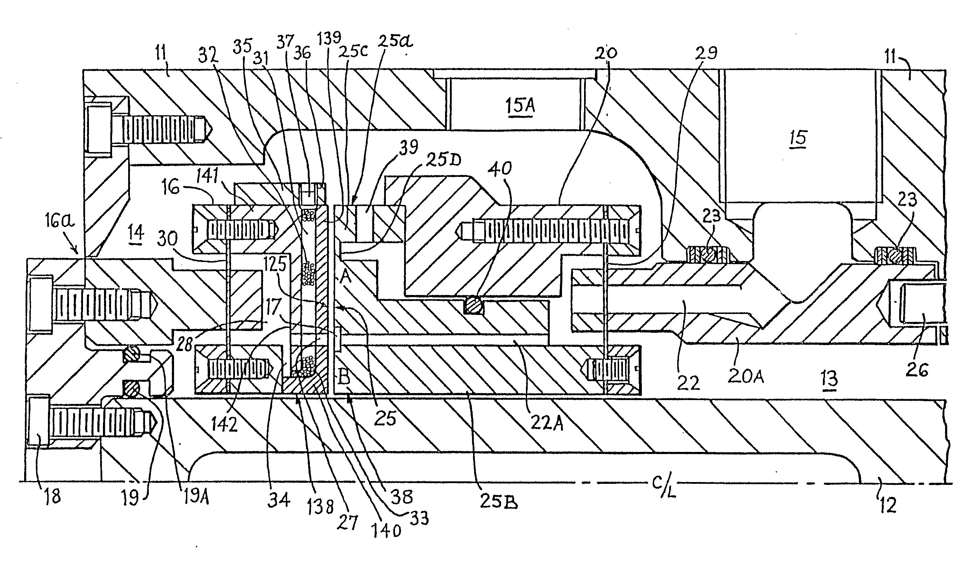

In order that the invention may be more readily understood, reference will now be made to the accompanying drawing which is a half-section of a positive clearance radial face seal having two relatively rotatable sealing faces, and incorporating a cooling means according to the invention.

Referring to the drawing, a housing 11 has an opening through which passes a rotatable shaft 12, a seal being provided to prevent or minimise fluid leakage between a region 13 of a fluid at high pressure and a region 14 of a fluid at low pressure. This seal includes a backplate 20 which is mounted, by means of a mounting part 20A thereof, in the housing with a clearance around the shaft 12, and is in sealed engagement with the housing 11 by means of annular sealing rings 23 and is prevented from rotation by a pin 26.

The left-hand end portion of the backplate (as seen in the drawing) constitutes part of one working element or sealing member 38 which forms one or two relatively rotatable sealing faces 25 of the positive clearance radial face seal. The sealing face 25 is formed on an annular pressure-deflectable element 25A consisting of rigid radially inner and outer rings 25B, 25C supporting an intermediate elastic portion 25D. The outer ring 25C abuts the left-hand end of backplate 20, but the inner ring 25B is spaced axially away from the backplate 20, and this space behind inner ring 25B and portion 25D is connected to the region 14 at low pressure by hole 39. Part of the inner ring 25B is axially movable in the bore of backplate 20, to which it is sealed by an annular sealing ring 40. The inner annular part of ring 25B extends within the mounting part 20A of the backplate, to which part it is secured by the flexible diaphragm or membrane 29. The latter is such that although it is very stiff in resisting relative radial or circumferential movement of ring 25B with respect to part 20A, it is relatively flexible in the axial direction.

A collar 16 is mounted to rotate with the shaft 12 by means of a mounting part 16A of the collar, and the mounting part 16A being keyed to the shaft by screw-threaded bolts 18 or other suitable means such as pins. The mounting part 16A comprises two portions which are bolted together, and annular sealing rings 19 and 19A prevent leakage between the collar mounting part 16A and shaft 12 and mounting part portions respectively. The collar 16 is also secured to its mounting part 16A by a flexible diaphragm or membrane 30. The right-hand end portion of the collar 16 (as seen in the drawing) constitutes part of another working element or sealing member 138 which forms the other face 125 of the two relatively rotatable sealing faces of the seal. Faces 25, 125 are machined radially flat in manufacture.

The face seal operates as described in said GB—A—2033978 to which reference should be made.

The face seal illustrated in the present application is of the buffer type, and fluid at a higher pressure than that in region 13 is fed through conduit 15 in the housing 11 to passages 22 to 22A in the backplate mounting part 20A and inner ring 25B of the deflectable element respectively and thence to an annular recess 17 between the inner and outer periphery of the faces 25, 125 and through holes 27 in the sealing face 125 to space 28 within the collar 16. There will therefore be a flow of fluid from region 17 radially inward over co-operating areas B of the faces 25, 125 to the region 13; and also a flow of fluid from region 17 radially outward over co-operating areas A of the faces 25, 125 to the region 14. Outwardly flowing buffer fluid is exhausted to drain, and subsequent re-circulation, through a conduit 15A in the housing 11.

In operation of the face seal, owing to the pressure gradients over sealing face areas A and B, the deflectable element 25A will deflect to afford a convergent passage between co-operating areas A of faces 25, 125. The seal is so dimensioned that, in operation, the minimum clearance between the faces 25, 125 occurs at the outer periphery of areas A and is of the order of 0.01 mm. It should be noted that a rebate may be provided near the outer periphery of the sealing faces to accommodate fastening means, e.g. bolt-holes, bolt-heads, etc., and this rebate is set back from the sealing face by a much greater amount than the gap, and therefore the rebated portion does not form part of the sealing face.

The diaphragms 29, 30 provide quasi-static seals between the pressure regions and provide for self-alignment of the seal parts bearing the sealing faces 125, 25. The axial and angular (tilting) stiffness of the diaphragms is chosen to be less than that of the fluid film between the sealing faces 125, 25. It will be appreciated that the pressures acting on the left and right hand ends respectively of the collar 16 and backplate 20 are balanced.

The flow of sealing fluid between faces 25, 125, one of which is rotating at high speed relative to the other, generates a large amount of heat, mainly due to shear of the fluid film.

To dissipate this heat, the arrangement now to be described is employed in the working element 138.

The working element 138 is formed, to the rear of the sealing face 125, with an annular cavity or passage 31 which is filled with a mass 32 of porous sintered material having interconnecting pores and which is integral with the wall 139 on which sealing face 125 is formed. The material of the wall 139 and the sintered mass is of high thermal conductivity, for example of copper or copper alloy. At its radially inner periphery, the annular passage 31 has an axially extending portion 33 which communicates with a radially extending annular passage 34 leading from the space 28 within the collar 16. At its radially outer periphery the passage 31 is covered by a ring 35 having a plurality of circumferentially-spaced radial holes 36 which are aligned with the passage 31 and of which selected ones are closed by plugs 37 for a purpose to be described.

The annular cavity 31 may be filled with the porous mass by tinning annular copper members, pressing them together with copper powder between them, and then sintering. To facilitate this, the collar 16 is made of two ring members 140 and 141, the smaller diameter ring member 140 having a radially outward flange at one end consitit:uting the wall 139 defining the sealing face 125, and the longer diameter ring member 141 having a radially inward flange constituting wall portion 141 of the cavity 31 and of which the inner periphery is spaced from the ring member 140 to provide the passage portion 33 communicating with the space 28 behind the wall 142. The separate parts of the collar may be secured together by screws or any other convenient means, with the sinterable mass sandwiched between the walls 139 and 142.

In operation of the face seal described herein, there is a flow of cooling buffer fluid taken from the annular region 17 through axial holes 27, which can be lined where they pass through the sintered material 32, to the space 28 from whence the buffer fluid flows radially inwardly through passage 34, axially through the inlet passage portion 33 and then radially outwardly through the interconnected pores of the annular mass of sintered material 32 in the passage 31 and out through the unplugged holes 36 in the ring 35 overlying the peripheral gap between the wall 139 and 142 to the low pressure region 14. Thus there is a flow of cooling fluid across the rear of substantially the entire working face 125 of the working element 138 with the sintered annular mass 32 acting as a heat exchanger having an extended heat transfer surface. The portion of the sintered mass 32 in the axial passage 33 ensures that the radially inner corner of the collar 16 is adequately cooled. It will be appreciated that flow through the sintered mass will be determined by the number of radial holes 36 which are closed by the plugs 37. The buffer fluid may be a gas or, as is preferred, a liquid and may itself be cooled at source.

Various modifications may be made without departing from the invention. For example, the cooling means may be located to the rear of the sealing face 25 instead of or as well as in the collar 16.

Further, the mass of porous material need not be sintered; the important conditions are that it has interconnected pores through which the cooling fluid can flow, and that the material is in intimate thermal contact with the material of the working element behind its working face. Thus the mass may comprise small spheres, of say 1.65 mm. diameter, or particles which are coated with brazing metal and, after insertion in the passage, are heated to melt the coating and thus connect the spheres or particles together and to the material of the working element. A small spherical or other particles of a good thermally conducting material may simply be pressed together between the opposed walls of the cooling passage to provide intimate thermal contact between the particles and with the rear of the wall on which the working face is formed.

## Claims

1. A positive clearance radial face seal comprising two sealing members (38, 138) mounted respectively on a relatively rotatable shaft (12) and housing (11) members and each having opposed portions defining annular sealing faces (25, 125) having a radial clearance therebetween forming a communicating path between regions (13, 14) of higher and lower pressures, characterised in that at least one of the sealing members (138) has a cavity (31) behind its sealing face (125) and defined, at least in part, by substantially the entire rear surface of the wall (139) of the sealing member on which said sealing face is formed, a porous thermally-conductive mass (32) having interconnecting pores filling said cavity (31) and in intimate thermal contact with the rear surface of said wall (139), said cavity (31) having inlet means (33) and outlet means (36), and means (15, 22, 22a, 17, 27, 28) for feeding a cooling fluid under pressure to said inlet means (33) to flow through the interconnecting pores of the porous mass (32) in the cavity (31) and out through said outlet means (36).

2. A seal according to claim 1, characterised in that the particles or components of the porous mass (32) are bonded together and to the rear surface of the wall (139) of the sealing member (138).

3. A seal according to claim 1 or 2, characterised in that the porous mass (32) comprises sintered material.

4. A seal according to claim 1, 2 or 3, wherein said at least one sealing member (138) comprises a collar (16) comprising two ring members (140, 141) of different diameters, the smaller diameter ring member (140) having a radially outward annular flange at one end constituting a first wall portion (139) defining the sealing face (125) and the larger diameter ring member (141) having a radially inward annular flange constituting a second wall portion (142) which, when the rings (140, 141) are assembled to form the collar (16), is spaced from the rear face of said first wall portion (139) to form said cavity (31) behind said first wall portion (139) and is also spaced at its inner periphery from the smaller diameter ring member (140) to provide said inlet means (33) communicating with a space (28) in the collar (16) behind the second wall portion (142), and in that the porous mass (32) in the cavity (31) comprises sintered material, and means are provided for admitting cooling fluid to the space (28) in the collar (16) behind the second wall portion (142) to flow through the inlet means (33) and radially outward through the porous mass (32) to the outlet means comprising the outer peripheral gap between the first and second wall portions (139, 142).

5. A seal according to claim 4, characterised in that said outlet means includes circumferentially spaced holes (36) in a ring (35) overlying said peripheral gap, and means (37) for closing selected ones of said holes (36).

6. A seal according to claim 4 or 5, wherein said at least one sealing member (138) is the rotatable sealing member of the seal, and cooling fluid is admitted to said space (28) in the collar behind the second wall portion (142) by way of holes (27) extending from the sealing face (125) of the first wall portion (139) through said first wall portion (139) the porous mass (32) and the second wall portion (142), the ends of the holes (27) in sealing face (125) rotating opposite a recess in the sealing face (25) of the stationary sealing member (38) to which the cooling fluid is fed through the stationary sealing member (38).

## Revendications

1. Palier à anneau glissant sans contact, comprenant deux organes d'etanchéité (38, 138) montés respectivement sur une arbre (12) et un logement (11) rotatifs l'un par rapport à l'autre et possédant chacun des parties opposées définissant des faces d'étanchéité annulaires (25, 125) entre lesquelles existe un jeu radial formant un trajet de communication entre des régions (13, 14) de pression élevée et de pression faible, caractérisé en ce qu'au moins l'un des organes d'étanchéité (138) possède une cavité (31) située derrière sa face d'étanchéité et définie, au moins en partie, sensiblement par toute la surface postérieure de la paroi (139) de l'organe d'étanchéité sur lequel la face d'étanchéité est formée, une masse poreuse conductrice de la chaleur (32) comportant des pores en interconnexion remplissant ladite cavité (31) et en contact thermique intime avec la surface postérieure de ladite paroi (139), ladite cavité (31) comportant des moyens d'entrée (33) et des moyens de sortie (36), et des moyens (15, 22, 22a, 17, 27, 28) pour amener un fluide de refroidissement sous pression sur lesdits moyens d'entrée (33), afin qu'il s'écoule à travers les pores en interconnexion de la masse poreuse (32) située dans la cavité, en sortant par les moyens de sortie (36).

2. Palier selon la revendication 1, caractérisé en ce que les particules ou constituants de la masse poreuse (32) sont enliés ensemble et à la surface postérieure de la paroi (139) de l'organe d'étanchéité (138).

3. Palier selon la revendication 1 ou 2, caractérisé en ce que la masse poreuse (32) comprend un matériau fritté.

4. Palier selon la revendication 1, 2 ou 3, dans lequel au moins l'un (138) des organes d'étanchéité comprend un collier (16) comprenant deux organes en forme de bague (140, 141) de diamètres différents, l'organe en forme de bague de plus petit diamètre (140) comportant un rebord annulaire radialement extérieur à une extrémité, qui constitue une première partie de paroi (139) définissant la face d'étanchéité (125), et l'organe en forme de bague de plus grand diamètre (141) comportant un rebord annulaire radialement intérieur constituant une seconde partie de paroi (142) qui, lorsque les bagues (140, 141) sont assemblées pour former le collier (16), est espacée de la face postérieure de ladite première partie de paroi (139) pour former ladite cavité (31) derrière la première partie de paroi (139), et est également espacée, à sa périphérie intérieure, de l'organe en forme de bague de plus petit diamètre (140), pour définir lesdits moyens d'entrée (33) qui communiquent avec un espace (28) situé dans le collier (16) derrière la seconde partie de paroi (142), et en ce que la masse poreuse (32) située dans la cavité (31) comprend un matériau fritté, des moyens étant prévus pour admettre le fluide de refroidissement vers l'espace (28) situé dans la collier (16) derrière la seconde partie de paroi (142), pour qu'il s'écoule à travers les moyens d'entrée (33) et radialement vers l'extérieur à travers la masse poreuse (32), vers les moyens de sortie qui comprennent l'interstice périphérique extérieur entre les première et seconde parties de paroi (139, 142).

5. Palier selon la revendication 4, caractérisé en ce que les moyens de sortie comprennent des trous (36) circonférentiellement espacés dans une bague (35) s'étendant au dessus de l'interstice périphérique, et des moyens (37) pour fermer certains, choisis, desdits trous (36).

6. Palier selon la revendication 4 ou 5, dans lequel le ou les organes d'étanchéité (138) constituent l'organe d'étanchéité rotatif du palier, et le fluide de refroidissement est admis vers ledit espace (28) situé dans le collier derrière la seconde partie de paroi (142) au moyen de trous (27) s'étendant depuis la surface d'étanchéité (125) de la première partie de paroi (139) à travers ladite première partie de paroi (139), la masse poreuse (32) et la seconde partie de paroi (142), les extrémités des trous (27) de la face d'étanchéité (125) tournant en vis-à-vis d'un évidement formé dans la face d'étanchéité (25) de l'organe d'étanchéité immobile (38), dans lequel le fluide de refroidissement est amené à travers l'organe d'étanchéité immobile (38).

## Patentansprüche

1. Einen bestimmten Abstand besitzende Flächendichtung aus zwei Dichtungsgliedern (38, 138) auf einer relativ verdrehbaren Welle (12) in einem Gehäuse (11), welche Glieder gegenüberliegende Teile besitzen, die ringförmige Dichtungsflächen (25, 125) definieren, welche einen radialen Raum zwischen sich aufweisen, der einen kommunizierenden Weg zwischen Regionen (13, 14) mit hohem und niedrigem Druck bildet, dadurch gekennzeichnet, daß mindestens ein Dichtungsglied (138) hinter seiner Dichtungsfläche (125) einen Hohlraum (31) aufweist, der mindestens teilweise durch im wesentlichen die gesamte Rückfläche der Wandung (139) des Dichtungsteiles. definiert ist, auf welcher Dichtungsfläche eine poröse, thermisch leitende Masse (32) geformt ist, die verbundene Poren besitzt und den Hohlraum füllt und sich im innigen thermischen Kontakt mit der Rückfläche der Wandung (139) befindet, wobei der Hohlraum (31) einen Einlaß (33), einen Auslaß (36) und Mittel (15, 22, 22a, 17, 27, 28) zur Zufuhr einer unter Druck stehenden Flüssigkeit durch die verbundenen Poren der porösen Masse (32) im Hohlraum (31) und zur Abfuhr durch den Auslaß (36) besitzt.

2. Dichtung nach Anspruch 1, dadurch gekennzeichnet, daß die Partikel oder Komponenten der porösen Masse (32) miteinander und mit der Rückfläche der Wandung (139) des Dichtungsgliedes (138) verbunden bzw. verklebt sind.

3. Dichtung nach Anspruch 1 oder 2, dadurch gekennzeichnet, daß die poröse Masse (32) aus gesintertem Material besteht.

4. Dichtung nach einem der Ansprüche 1 bis 3, dadurch gekennzeichnet, daß mindestens ein Dichtungsteil (138) einen Kragen (16) besitzt, der aus zwei Ringen (140, 141) unterschiedlichen Durchmessers besteht, von denen der Ring (140) kleineren Durchmessers einen radial auswärts gerichteten Ringflansch am einen Ende einer ersten Wand (139) bildet, welche die Dichtungsfläche (125) definiert, und der Ring (141) mit dem größeren Durchmesser einen radial nach innen gerichteten Ringflansch besitzt, der eine zweite Wand (142) bildet, die nach Zusammensetzen der Ringe (140, 141) zur Herstellung des Kragens (16) von der Rückfläche der ersten Wand (139) einen Abstand besitzt, um den erwähnten Hohlraum (31) hinter der ersten Wand (139) herzustellen und auch an ihrem inneren Umfang vom Ring (140) kleineren Durchmessers einen Abstand besitzt, um den Einlaß (33) zu erzeugen, welcher mit einem Raum (28) im Kragen (16) hinter der zweiten Wand (142) kommuniziert, und daß die poröse Masse (32) im Hohlraum (31) aus gesintertem Material besteht und Mittel vorgesehen sind, um die Kühlflüssigkeit zum Raum (28) im Kragen hinter der zweiten Wand (142) zuzuführen und durch den Einlaß (33) und radial auswärts durch die poröse Masse (32) zum Auslaß strömen zu lassen, der aus dem äußeren Umfangsspalt zwischen der ersten und der zweiten Wand besteht.

5. Dichtung nach Anspruch 4, dadurch gekennzeichnet, daß der Auslaß im Abstand auf dem Umfang Löcher (36) in einem Ring (35) besitzt, die den Umfangsspalt und Mittel (37) zum wahlweisen Verschließen einiger der Löcher (36) abdecken.

6. Dichtung nach Anspruch 4 oder 5, dadurch gekennzeichnet, daß mindestens ein Dichtungsteil (138) den umlaufenden Teil der Dichtung bildet und daß die Kühlflüssigkeit zum Raum (28) im Kragen hinter der zweiten Wand (142) durch Löcher (27) zugeführt wird, die von der Dichtungsfläche (125) der ersten Wand (139) durch die erste Wand (139), die poröse Masse (32) und die zweite Wand (142) verlaufen, wobei die Enden der Löcher (27) in der Dichtungsfläche (125) gegenüber einer Ausnehmung in der Dichtungsfläche (25) der stationären Dichtung (38) rotieren, zu welcher die Kühlflüssigkeit durch die stationäre Dichtung zugeführt wird.

0 032 433